# EUROPEAN PATENT SPECIFICATION

(11) **EP 0 677 422 B1**
(45) Date of publication and mention of the grant of the patent: **04.06.1997**
(21) Application number: 94830086.8
(22) Date of filing: 25.02.1994
(51) Int. Cl.: B60N 2/48

(54) **Headrest support rod for motor-vehicle seats**
Tragholm einer Kopfstütze für Kraftfahrzeugsitze
Barre de support d'appui-tête pour sièges de véhicules automobiles

(43) Date of publication of application: 18.10.1995
(73) Proprietor: GESTIND-M.B." MANIFATTURA DI BRUZOLO" S.P.A, I-10050 Bruzolo (Torino) (IT)
(72) Inventor: De Filippo, Emilio, I-10050 Bruzolo, (Torino) (IT)
(74) Representative: Buzzi, Franco

(56) References cited:
- EP-A- 0 196 014
- EP-A- 0 322 373
- EP-A- 0 412 307
- EP-A- 0 457 177
- EP-A- 0 597 808
- DE-A- 2 836 579
- FR-A- 2 359 724
- FR-A- 2 467 730

## Description

The present invention is related to support rods for motor-vehicle seats, comprising a first rod element adapted to be coupled in a slidably adjustable way with a headrest frame, and a second rod element adapted to be fixed onto a seat backrest, and wherein said first and second rod elements are connected to each other by means of an articulated joint to which an outer protection element, connected to the rod, is associated (see for example FR-A-2 359 724, corresponding to the preamble of claim 1). Support rods of the above-mentioned type are currently employed by the Applicant in the production of headrests of the type in which the height adjustment of the headrest cushion is performed by sliding the frame relative to a pair of said support rods, and the inclination adjustment of the cushion is obtained by swinging the first rod elements relative to the second rod elements. In the mounted condition of the headrest onto a motor-vehicle seat backrest, the articulated joint between the first and second rod elements is placed immediately above the top surface of the backrest, and the protection element associated to each rod normally performs a simple aesthetic covering function of said articulated joint.

Traditionally the protection element is constituted by a flexible shroud, normally an elastomeric material bellow, which however is not able to prevent in use accidental contacts of the user's head against the mutually articulated parts of the rod elements in case of accident, with risks of injury. In this connection, according to a specific safety requirement the portions of the support rods comprised between the seat backrest top and the headrest cushion, and accessible from the outside, should have no sharp corners or in any case curvature radiuses lower than a predetermined value. Normally the ends of mutual articulated connection between the two rod elements are instead formed with respective stop members for limiting the angular displacements of the headrest, and these stop members are subjected to be contacted from outside owing to the flexibility of the protection element.

In European patent application n. 93830166.0 (published as EP-A-0 597 808 on 18/5/94, ie after the filing date of the present application), the same Applicant has proposed a headrest support rod for motor-vehicle seats of the type defined at the beginning, which is adapted to prevent any risks of contact an interference with the areas of the two support rod elements corresponding to the articulated joint, providing the protection element as a rigid shell formed by two moulded plastic-material symmetrical half-shells connected to each other by means of a restrained joint. This solution, while being totally efficient from the functional point of view, is affected in some applications by a certain degree of assembling complexity, particularly when automatic apparatus are employed, as far as the coupling between the two half shells and the first element of the support rod is concerned.

The object of the present invention is to provide a support rod of the above-referenced type which on one hand efficiently protects the area of the articulated joint between the two rod elements against the risk of accidental contacts and, on the other hand, enables an easier and more convenient assembling of the rod itself during manufacturing thereof.

According to the invention, this object is achieved by virtue of the technical features given in the characterising part of claim 1.

According to a preferred embodiment of the invention, the protection body has a generally frusto-pyramidal shape with rounded edges and the base thereof, which in use is adapted to rest upon the top of a seat backrest, has a convex outer surface.

According to one of the features of the invention, the resilient anchoring tubular part of the protection body has a cross-section the inner size of which is slightly lower than the outer size of the cross section of the first rod element, and is formed with an inner annular rib force-fitted onto an outer annular complementary recess of the first rod element.

Due to this conformation, mounting of the protection body can be easily carried out, also with the aid of automatic assembling apparatus, introducing this protection body on top of the first rod element and then axially sliding same towards the articulated joint, until elastic engagement of the annular rib of the anchoring tubular part within said annular outer recess.

Further features of the invention will become apparent in the following detailed description, with reference to the annexed drawings provided purely by way of non limiting example, wherein:
- figure 1 is a diagrammatic perspective view of a headrest support rod according to the invention,
- figure 2 is a partially sectioned view along line II-II of figure 1,
- figure 3 is a perspective view from below of the protection element of the rod, and
- figure 4 is a perspective view from above of the protection element.

Referring to the drawings, reference numeral 1 generally designates a support rod for motor-vehicle headrests, essentially constituted by a first rod element or upper element 2 and by a second rod element or lower element 3, articulated to each other by means of an articulated joint 4.

The upper rod element 2 is formed, in a known way, by a metal core (not shown in the drawings) on which a plastic material hollow body 5 is overmoulded, formed on one side with a series of positioning notches, only one of which is shown at 6 in figure 2, and on the opposite side with a key appendage 7, as well as with a lower annular recess 5a.

The rod element 2 is intended to be slidably fitted within a respective tubular upright of a frame made of moulded plastic material and which in turn is incorporated in a known way within a headrest cushion. The positioning notches 6 cooperate, also in a known way, with a fixing elastic member by which the headrest can be positioned in any selected height position relative to a pair of support rods 1.

The lower rod element is adapted to be fixed, in a known way, on top of the backrest of a motor-vehicle seat, is such a position that the articulated joint 4 is placed immediately above the top surface of the backrest.

The articulated joint 4 is constituted, also in a known way, by respective flat ends 8, 9 of the rod element 2 and of the rod element 3, respectively, which are formed with respective cooperating stop members for limiting the mutual rotation between the two rod elements 2, 3 (and thus the oscillation of the headrest relative to the seat backrest), and crossed by a pivot pin 10.

Reference numeral 11 generally designates an outer element for the protection of the articulated joint 4, which according to the invention is constituted by a relatively rigid hollow monolithic body having a generally frusto-pyramidal shape with rounded edges. The monolithic body 11 is formed by moulding of a soft plastic material having a relatively important thickness, so as to achieve a certain degree of rigidity.

This body 11 is provided inferiorly with a base 12 which is further thickened and has, as it is shown in detail in figure 2, an outer rounded convex surface. Superiorly, the body 11 defines a resilient tubular anchoring part 13, having a relatively reduced thickness and a circular cross-section the inner size of which is slightly lower than the outer size of the cross-section of the first rod element 2. As it can be seen in figures 2 and 4, the tubular anchoring part 13 is formed with an annular inner rib 14 having a radial dimension substantially corresponding to that of the annular recess 5a of the hollow body 5 of the upper rod element 2.

Further, as it can be seen in figure 3, the protection body 11 is innerly formed with integral stiffening ribs 15 projecting from two opposite walls thereof, and with tubular ribs 16 placed in correspondence of the edges thereof. Ribs 15 and 16 delimit an inner seat 17 for housing the articulated joint 4.

For the mounting of the protection body 11 on the support rod 1, initially the top of the upper rod element 2 is simply fitted within the seat 17, through the base 12, and then the protection body 11 is force-slided in the direction of the articulated joint 4. The elasticity of the tubular anchoring part 13 enables passing thereof over the key projection 7 and forced displacement thereof along the plastic material body 5 as far as the annular recess 5a, in correspondence of which the annular inner rib 14 will fit.

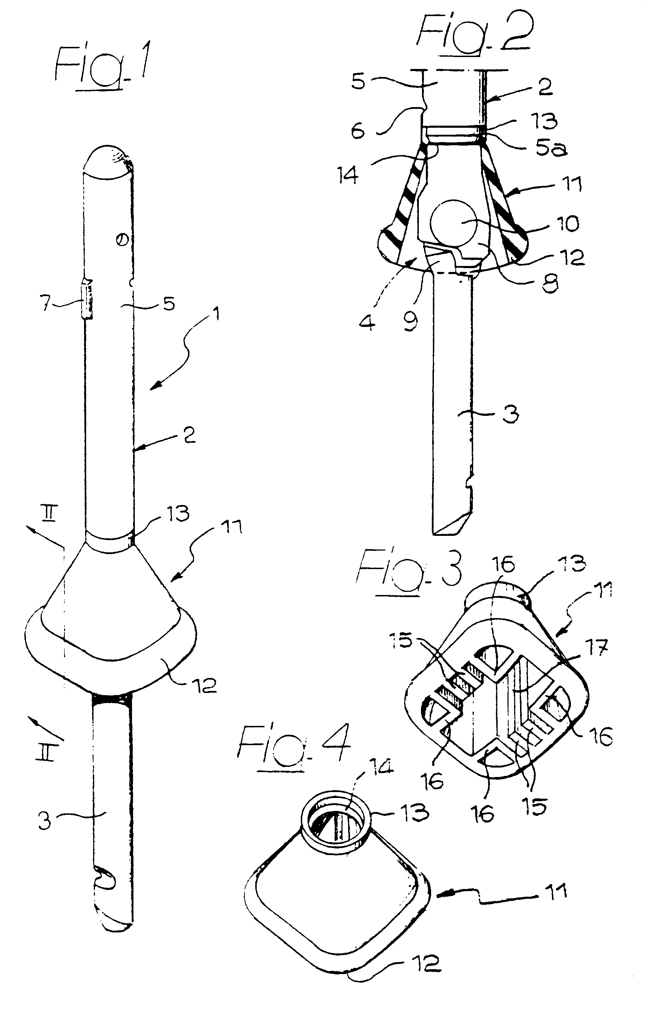

In the assembled condition, shown in figures 1 and 2, the tubular anchoring part 13 is positioned flush with the base of the hollow body 5, the articulated joint 4 is housed within the seat 17, and the protection body 11 is axially anchored to the rod element 2 by means of the annular rib 14 engaged onto the annular recess 5a, with the opposite ends of the pin 10 of the articulated joint 4 facing towards the ribs 15.

In the mounted condition of the headrest onto the backrest of a motor-vehicle seat, the headrest, and thus the rod elements 2 of two respective support rods 1, can swing relative to the rod elements 3 thereof, trailing during their angular displacement the respective protection bodies 11, the convex bases 21 of which move in close proximity of or in contact with the top surface of the backrest The articulated joints 4 of the two support rods 1 are thus efficiently covered and inaccessible in any angular and height adjustment position of the headrest, thus preventing dangerous consequences deriving in use from possible accidental impact by the user.

Naturally the details of construction and the embodiments may be varied with respect to what has been disclosed and illustrated, if not thereby departing from the scope of the present invention, such ad defined in the appended claims.

## Claims

1. Headrest support rod (1) for motor-vehicle seats, comprising a first rod element (2) adapted to be coupled in a slidably adjustable way to a headrest frame, and a second rod element (3) intended to be fixed onto a seat backrest, wherein said first and second rod elements (2, 3) are connected to each other by means of an articulated joint (4) comprising a transverse pivot pin (10) and to which an outer protection element (11), connected to the support rod (1), is associated, said protection element being constituted by a relatively rigid hollow monolithic body (11) of moulded plastic material, defining at one end thereof a resilient tubular part (13) for the axial anchoring onto the first rod element (2), and at the opposite end thereof an enlarged base (12) with an inner seat (17) through which the second rod element (3) is freely projecting, characterized in that said resilient tubular anchoring part (13) of the protection body (11) has a cross-section with an inner size slightly lower than the outer size of the cross-section of the first rod element (2), and is formed with an annular inner rib (14) force-engaging an annular outer complementary recess (5a) of the first rod element (2), and in that said protection body (11) is innerly formed with integral stiffening ribs (15, 16) facing towards the opposite ends of said pivot pin (10).

2. Support rod according to claim 1, characterized in that the protection body (11) has a substantially frusto-pyramidal shape with rounded edges.

3. Support rod according to claim 1, characterized in that the ribs (16) situated in correspondence of the inner edges of the protection body (11) have a tubular configuration.

4. Support rod according to any of the preceding claims, characterized in that the base (12) of the protection body (11) has an outer rounded convex surface.

5. Support rod according to any of the preceding claims, characterized in that the protection body (1) is made of a relatively soft plastic material.

## Patentansprüche

1. Kopfstützen-Haltestab (1) für Kraftfahrzeug-Sitze, aufweisend ein erstes Stabelement (2), das angepaßt ist, in einer gleitfähigen einstellbaren Weise mit einem Kopfstützenrahmen gekoppelt zu werden, und ein zweites Stabelement (3), das vorgesehen ist, auf einer Sitz-Rückenstütze befestigt zu werden, wobei das erste und zweite Stabelement (2,3) miteinander verbunden sind durch ein Gelenk (4), welches aufweist einen quergerichteten Schwenkzapfen (10), und an dem ein äußeres Schutzelement (11), verbunden mit dem Haltestab (1), befestigt ist, wobei das Schutzelement gebildet ist durch einen relativ steifen, hohlen monolithischen Körper (11) aus geformtem Kunststoffmaterial, der an seinem einen Ende einen elastischen rohrförmigen Teil (13) für die axiale Verankerung auf dem ersten Stabelement (2) und an seinem entgegengesetzten Ende eine vergrößerte Basis (12) mit einem inneren Sitz (17) definiert, durch den das zweite Stabelement (3) frei vorspringt, dadurch gekennzeichnet, daß der elastische rohrförmige Verankerungsteil (13) des Schutzkörpers (11) einen Querschnitt hat mit einer Innenabmessung, die leicht kleiner ist als die Außenabmessung des Querschnittes des ersten Stabelementes (2), und gebildet ist mit einer ringförmigen Innenrippe (14), die einen Krafteingriff bildet mit einer ringförmigen äußeren komplementären Vertiefung (5a) des ersten Stabelementes (2), und daß das Schutzelement (11) innerlich gebildet ist mit integralen Versteifungsrippen (15, 16), welche zu den entgegengesetzten Enden des Schwenkzapfens (10) weisen.

2. Haltestab nach Anspruch 1, dadurch gekennzeichnet, daß der Schutzkörper (11) eine im wesentlichen stumpfpyramidale Form mit abgerundeten Kanten hat.

3. Haltestab nach Anspruch 1, dadurch gekennzeichnet, daß die Rippen (16), die entsprechend den Innenkanten des Schutzkörpers (11) angeordnet sind, eine rohrförmige Konfiguration haben.

4. Haltestab nach einem der vorhergehenden Ansprüche, dadurch gekennzeichnet, daß die Basis (12) des Schutzköpers (11) eine äußere abgerundete konvexe Oberfläche hat.

5. Haltestab nach einem der vorhergehenden Ansprüche, dadurch gekennzeichnet, daß der Schutzkörper (11) aus einem relativ weichen Kunststoffmaterial gemacht ist.

## Revendications

1. Tige (1) de support d'appui-tête pour siège de véhicule à moteur, comprenant un premier élément (2) de tige destiné à être couplé de manière réglable par coulissement à un cadre d'appui-tête, et un second élément (3) de tige destiné à être fixé sur un dossier de siège, dans laquelle le premier et le second élément de tige (2, 3) sont raccordés par un joint articulé (4) ayant une broche transversale (10) formant pivot et auquel est associé un élément externe de protection (11) raccordé à la tige de support (1), l'élément de protection étant constitué par un corps monolithique creux relativement rigide (11) de matière plastique moulée, délimitant à une première extrémité une partie tubulaire élastique (13) destinée à l'ancrage axial sur le premier élément de tige (2) et, à l'extrémité opposée, une base élargie (12) ayant un siège interne (17) par lequel dépasse librement le second élément de tige (3), caractérisée en ce que la partie tubulaire élastique (13) d'ancrage du corps de protection (11) a une section dont la dimension interne est légèrement inférieure à la dimension externe de la section du premier élément de tige (2) et a une nervure interne annulaire (14) coopérant à force avec une cavité annulaire complémentaire externe (5a) du premier élément de tige (2), et en ce que le corps de protection (11) comporte à l'intérieur des nervures solidaires de renforcement (15, 16) tournées vers les extrémités opposées de la broche (10) formant pivot.

2. Tige de support selon la revendication 1, caractérisée en ce que le corps de protection (11) a pratiquement une forme de tronc de pyramide à bords arrondis.

3. Tige de support selon la revendication 1, caractérisée en ce que les nervures (16) qui correspondent aux bords internes du corps de protection (11) ont une configuration tubulaire.

4. Tige de support selon l'une quelconque des revendications précédentes, caractérisée en ce que la base (12) du corps de protection (11) a une surface convexe externe arrondie.

5. Tige de support selon l'une quelconque des revendications précédentes, caractérisée en ce que le corps de protection (1) est formé d'une matière plastique relativement tendre.
